# FASCICULE DE BREVET EUROPEEN

(11) **EP 0 837 534 B1**
(45) Date de publication et mention de la délivrance du brevet: **03.07.2002**
(21) Numéro de dépôt: 97410110.7
(22) Date de dépôt: 07.10.1997
(51) Int. Cl.: H02B 1/21

(54) **Dispositif de support et d'alimentation électrique pour appareillage électrique**
Trag- und Stromeinspeisungsvorrichtung für ein elektrisches Gerät
Device for the support and power supply of an electrical apparatus

(30) Priorité: 18.10.1996 FR 9612927
(43) Date de publication de la demande: 22.04.1998
(73) Titulaire: Schneider Electric Industries SA, 92500 Rueil-Malmaison (FR)
(72) Inventeur: Morel, Robert, 38050 Grenoble cedex 09 (FR); Auque, Henri, 38050 Grenoble cedex 09 (FR); Kuntz, Jean-Jacques, 38050 Grenoble cedex 09 (FR); Romanet-Perroux, Philippe, 38050 Grenoble cedex 09 (FR)
(74) Mandataire: Ritzenthaler, Jacques

(56) Documents cités:
- EP-A- 0 349 782
- DE-A- 1 946 714
- DE-A- 3 409 211
- DE-A- 19 506 056
- DE-U- 7 923 422
- DE-U- 9 017 385
- US-A- 5 067 043
- US-A- 5 515 236

## Description

L'invention est relative à un dispositif de support et d'alimentation électrique pour un appareil électrique multipolaire, comprenant une platine parallèlélipipédique à boîtier en matériau isolant moulé, susceptible d'être montée sur les barres collectrices parallèles d'un jeu de barres, et renfermant:
- des conducteurs de dérivation présentant des longueurs identiques et s'étendant perpendiculairement au jeu de barres, dans des compartiments adjacents du boîtier, chaque conducteur comportant au moins une plage de raccordement électrique avec une borne correspondante de l'appareil, et une plage de contact destinée à venir en engagement avec la barre collective de la phase correspondante, les plages de raccordement étant agencées au voisinage des parties terminales des conducteurs de dérivation,
- des organes de connexion entre les bornes de l'appareil et les plages de raccordement des conducteurs de dérivation,
- et des moyens de retenue pour assurer le serrage des plages de contact contre les barres collectrices du jeu de barres.

Un tel dispositif est décrit dans le document DE 3409211 dans lequel les conducteurs de dérivation sont coplanaires, nécessitant la mise en place de cales conductrices entre les barres collectrices du jeu de barres et la face inférieure des conducteurs de dérivation. Le raccordement entre les bornes de l'appareil et les plages des conducteurs de dérivation s'effectue au moyen de câbles de liaison.

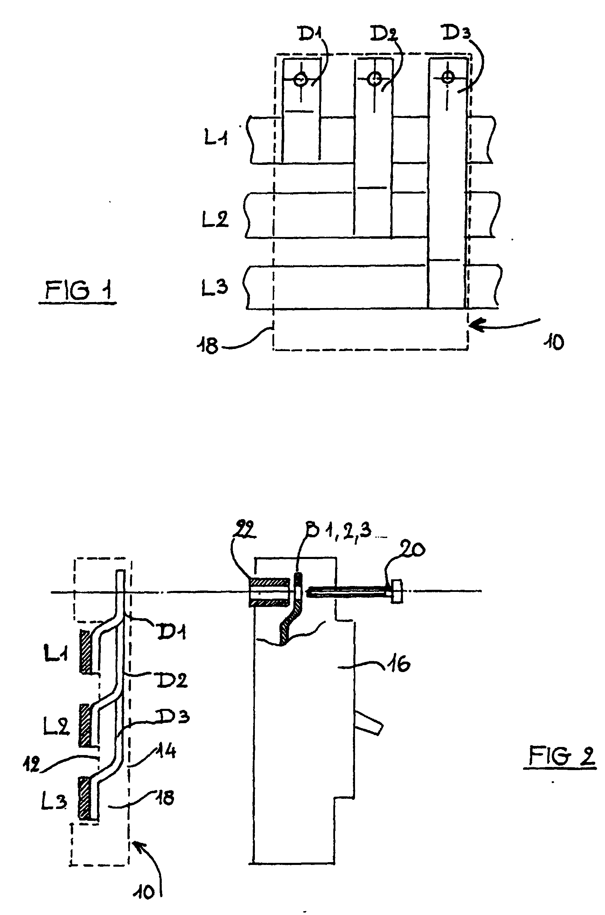

Les figures 1 et 2 représentent une autre platine de support et d'alimentation 10 de l'art antérieur, montée au niveau de sa face inférieure 12 encochée, sur un jeu de barres triphasé L1, L2, L3, et ayant une face supérieure 14 opposée susceptible de recevoir un appareil électrique 16, notamment un disjoncteur. Les barres collectrices du jeu de barres L1, L2, L3 s'étendent parallèlement entre elles avec un décalage d'isolement prédéterminé, et servent à la fois de support mécanique et d'alimentation électrique à l'appareil 16. La platine 10 comprend un boîtier 18 isolant (en traits pointillé) renfermant des conducteurs de dérivation D1, D2, D3 assurant la liaison électrique entre les barres collectrices du jeu de barres L1, L2, L3 et les bornes d'entrée B1, B2, B3 respectives des pôles de l'appareil 16. Un système de vis 20 et d'entretoises 22 permet d'assurer la connexion électrique entre les bornes B1, B2, B3 et les conducteurs de dérivation D1, D2, D3 de la platine 10. Le branchement électrique entre les conducteurs de dérivation D1, D2, D3 et les barres collectrices L1, L2, L3 intervient au moyen d'étriers de retenue (non représentés) destinés à serrer les conducteurs de dérivation D1, D2, D3 contre des plages de contact décalées des barres collectrices L1, L2, L3. Les conducteurs de dérivation D1, D2, D3 sont maintenus dans des compartiments individuels du boîtier 18, et présentent des formes coudés de longueurs différentes s'étendant perpendiculairement aux barres collectrices L1, L2, L3. Le conducteur de dérivation D2 s'arrête au niveau de la barre L2 et le conducteur D3 le plus long se prolonge jusqu'à la barre L3. Les plages de raccordement des bornes d'entrée B1, B2, B3 avec les conducteurs de dérivation D1, D2, D3 se trouvent sensiblement dans un même plan.

Un montage côte à côte de plusieurs platines 10 est possible dans le sens de la longueur des barres collectrices L1, L2, L3, de manière à constituer un répartiteur de distribution basse tension.

Une telle dissymétrie des conducteurs de dérivation D1, D2, D3 de cette platine 10 connue nécessite un positionnement précis de boîtier 18 sur le jeu de barres L1, L2, L3 en fonction du choix des départs à l'amont ou à l'aval de l'appareil 16. Dans le cas de la figure 2, l'alimentation des bornes B1, B2, B3 s'effectue à l'amont, et le départ se fait à l'aval. Dans le cas d'un départ à l'amont, il est nécessaire d'inverser d'un demi-tour la platine 10, ou de modifier l'emplacement des conducteurs de dérivation D1, D2, D3 dans les compartiments respectifs du boîtier 18. Les possibilités de distribution électrique faisant usage d'une telle platine d'adaptation sont limitées à un type donné d'installation électrique, et les possibilités de raccordement sont limitées.

L'objet de l'invention consiste à améliorer les possibilités de raccordement des appareils électriques montées sur des platines d'adaptation à un jeu de barres d'alimentation.

Le dispositif de support et d'alimentation selon l'invention est caractérisé en ce que :
- les conducteurs de dérivation sont coudés,
- les plages de contact sont situées dans un même plan s'étendant parallèlement à celui des plages de raccordement avec un décalage prédéterminé,
- les plages de raccordement comportent des orifices disposés symétriquement par rapport au plan moyen horizontal de la platine pour autoriser la mise en place des organes de connexion avec les bornes amont ou les bornes aval de l'appareil,
- les organes de connexion électrique comprennent des entretoises conductrices de formes tubulaires agencées entre lesdites bornes amont ou aval, et les plages de raccordement correspondantes des conducteurs de dérivation, la fixation étant obtenue au moyen de vis de serrage traversant respectivement lesdites bornes, les entretoises et les orifices associés.

Deux possibilités de connexion de l'appareil sont ainsi possibles sur la platine pour réaliser une alimentation par l'amont ou par l'aval. Ce choix peut être opéré au moment de l'installation par la mise en place des organes de connexion à un emplacement prédéterminé.

Selon un mode de réalisation préférentiel, les conducteurs de dérivation sont protégés par un plastron isolant recouvrant toute la surface supérieure de la platine, et ayant des opercules détachables en regard des orifices pour le passage des organes de connexion.

Selon une caractéristique de l'invention, les moyens de retenue comporte des étriers enfourchant chaque conducteur de dérivation au niveau de la plage de contact, chaque étrier étant doté d'une encoche semi-ouverte destinée à s'accrocher à l'arrière de la barre collectrice correspondante suite à l'action de serrage d'une vis de fixation.
Selon un développement de l'invention, la platine sert à alimenter deux appareils à départs opposés.

La même platine de base peut ainsi être utilisée pour réaliser deux types de répartiteurs, l'un autorisant le choix de raccordement à l'amont ou à l'aval d'un seul appareil, et l'autre permettant l'alimentation commune d'au moins une paire d'appareils à double départs.

Le boîtier de la platine d'adaptation multipolaire peut être formé par une structure monobloc ou modulaire.

D'autres avantages et caractéristiques ressortiront plus clairement de la description qui va suivre d'un mode de réalisation de l'invention, donné à titre d'exemple non limitatif, et représenté aux dessins annexés, dans lesquels:
- la figure 1 est une vue schématique d'un dispositif de support et d'alimentation électrique selon l'art antérieur, le boîtier de la platine étant représenté en pointillé,
- la figure 2 montre une vue de profil du dispositif de la figure 1, lors de la mise en place de l'appareil sur la platine,
- la figure 3 est une vue en élévation du dispositif de support et d'alimentation selon l'invention,
- les figures 4 et 5 sont des vues en coupe respectives selon les lignes 4-4 et 5-5 de la figure 3,
- la figure 6 est une vue de dessous de la figure 3,
- la figure 7 représente une vue en perspective de la platine de la figure 3,
- les figures 8 et 9 sont des vues identiques des figures 1 et 2, avec la platine selon la figure 4,
- la figure 10 est une vue identique de la figure 4 d'une variante de réalisation,
- la figure 11 représente une autre utilisation de la platine selon l'invention,
- la figure 12 montre une installation électrique agencée selon un répartiteur vertical avec un empilement de plusieurs platines,
- la figure 13 est une vue en coupe selon la ligne 13-13 de la figure 12.

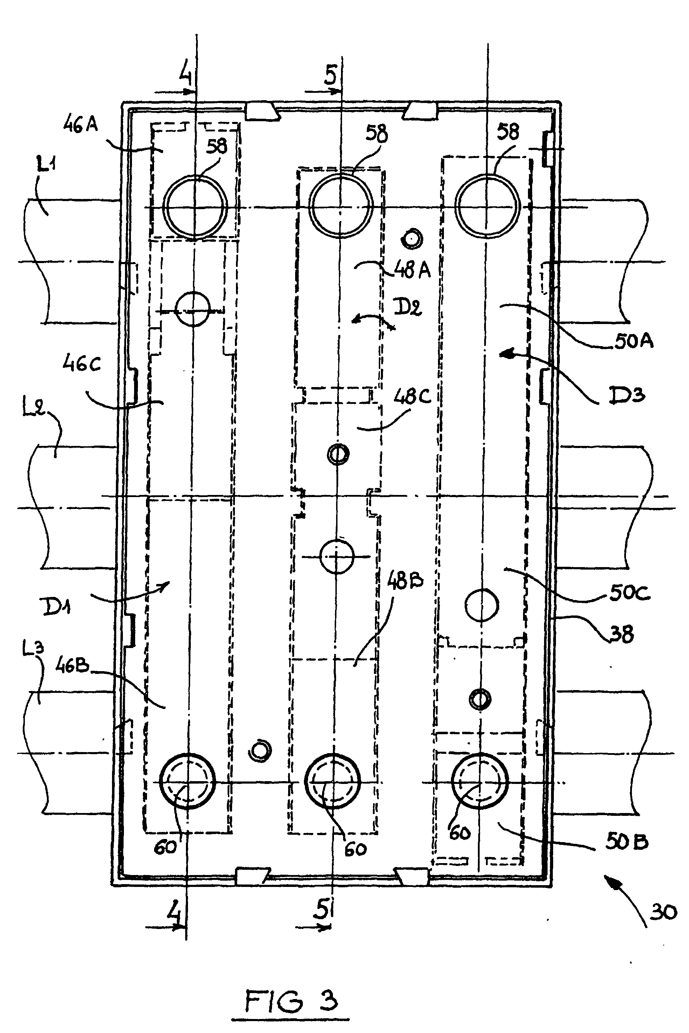

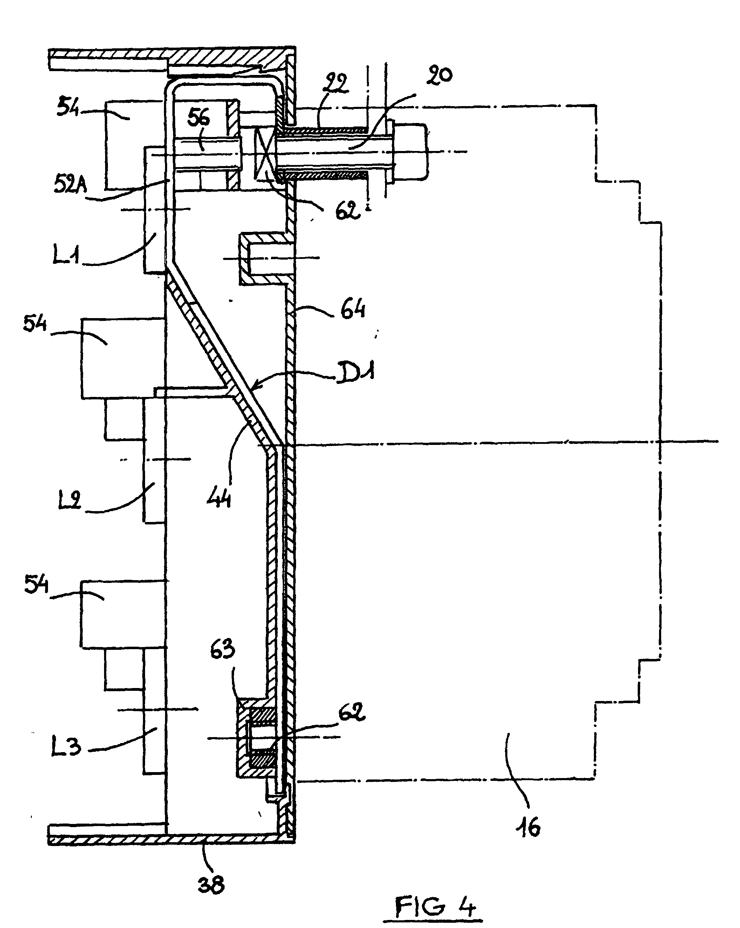

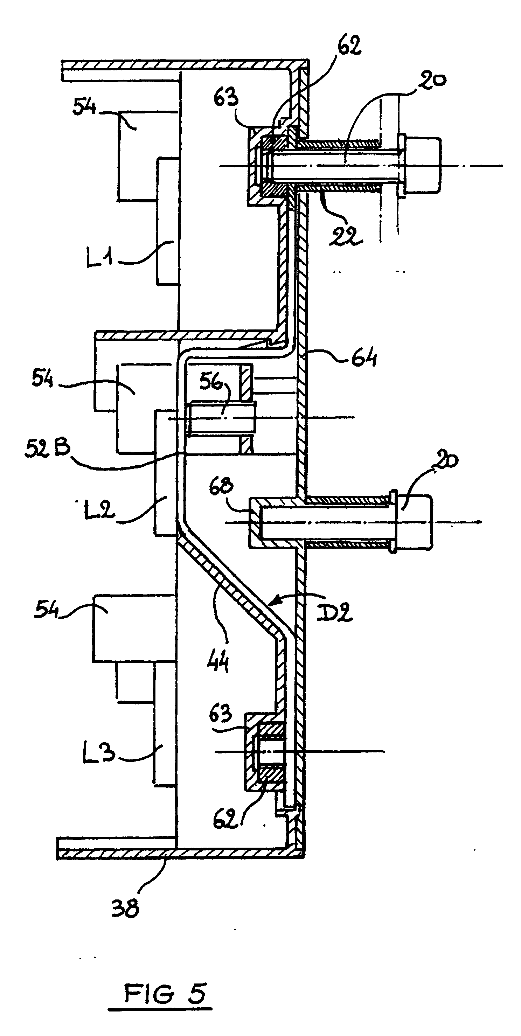

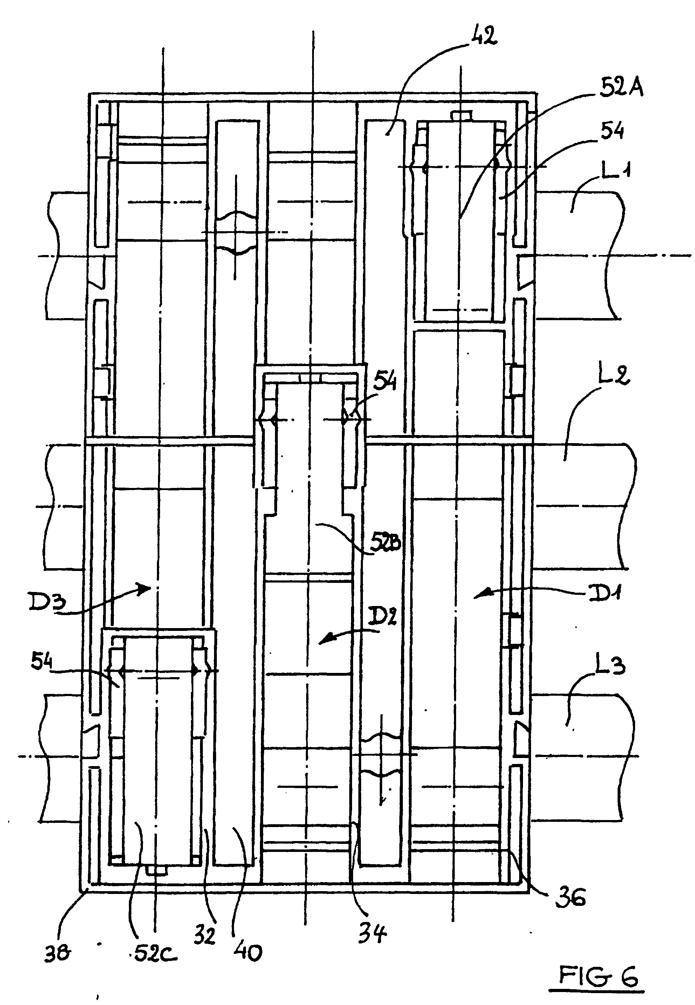

En référence aux figures 3 à 7, le dispositif de support et d'alimentation électrique comprend une platine d'adaptation désignée par le repère général 30 et équipée de trois conducteurs de dérivation D1, D2, D3 adaptables à un jeu de barres L1, L2, L3 triphasé. Les trois conducteurs D1, D2, D3 présentent les mêmes longueurs, et sont répartis parallèlement à intervalles réguliers dans des compartiments 32, 34, 36 adjacents du boîtier 38 parallèlépipédique en matériau isolant moulé. Les différents compartiments 32, 34, 36 élémentaires sont séparés les unes des autres par des cloisons verticales 40, 42 de subdivision, et comportent chacun des surfaces d'appui 44 pour le positionnement des conducteurs de dérivation D1, D2, D3. La longueur des conducteurs de dérivation D1, D2, D3 est dans l'exemple décrit, supérieur à l'écartement entre les barres collectrices L1, L3 extrêmes. Il est entendu que la longueur des conducteurs peut être voisine de l'écartement entre les barres L1 et L3.

Chaque conducteur de dérivation D1, D2, D3 est formé par une barrette allongée de section rectangulaire comportant deux parties opposées coplanaires 46A, 46B; 48A, 48B; 50A, 50B équipées de plages de raccordement avec les bornes de l'appareillage, et une partie intermédiaire 46C; 48C; 50C déformée ayant une plage de contact 52A, 52B, 52C destinée à venir en engagement avec la barre collectrice correspondante du jeu de barres L1, L2, L3. Les plages de contact 52A, 52B, 52C sont accessibles du côté du jeu de barres L1, L2, L3 en étant décalées l'une de l'autre dans la direction longitudinale par une distance séparant les barres collectrices L1, L2, L3. Les plages de contact 52A, 52B, 52C se trouvent d'autre part dans un même plan parallèle à celui des parties terminales 46A, 46B; 48A, 48B; 50A,50B.

Un étrier de retenue 54 en forme de U renversé enfourche chaque conducteur de dérivation D1, D2, D3 au niveau de la plage de contact 52A, 52B, 52C, et comprend une encoche semi-ouverte destinée à s'accrocher à l'arrière de la barre collectrice L1, L2, L3 correspondante pour la maintenir en engagement avec la plage de contact 52A, 52B, 52C. Le serrage s'opère au moyen d'une vis de fixation 56 vissée dans un trou taraudé de la face supérieur de l'étrier 54, et dont l'extrémité prend directement appui sur la plage de contact 52A, 52B, 52C.

Les plages de raccordement des parties terminales 46A, 46B; 48A, 48B; 50A, 50B de chaque conducteur de dérivation D1, D2, D3 sont pourvues d'orifices 58,60 susceptibles de coopérer avec les vis 20 de serrage des bornes B1, B2, B3 de l'appareillage. Les orifices 58,60 peuvent être filetés, ou être associés à des écrous 62 soudés aux plages, ou positionnées dans des logements 63 hexagonaux du boîtier 38. Les orifices 58 situés à la partie supérieure de la platine 30 sont alignés selon une direction perpendiculaire aux conducteurs de dérivation D1, D2, D3. Les orifices opposés 60 s'étendent le long de la partie inférieure de la platine 30 pour permettre une alimentation par l'aval.

Les orifices 58, 60 des conducteurs de dérivation D1, D2, D3 sont, dans l'exemple décrit, symétriques par rapport au plan médian horizontal de la platine 30. En position de montage de la platine 30 sur le jeu de barres L1, L2, L3, les orifices 58, 60 sont avantageusement également symétriques par rapport à la barre centrale L2.

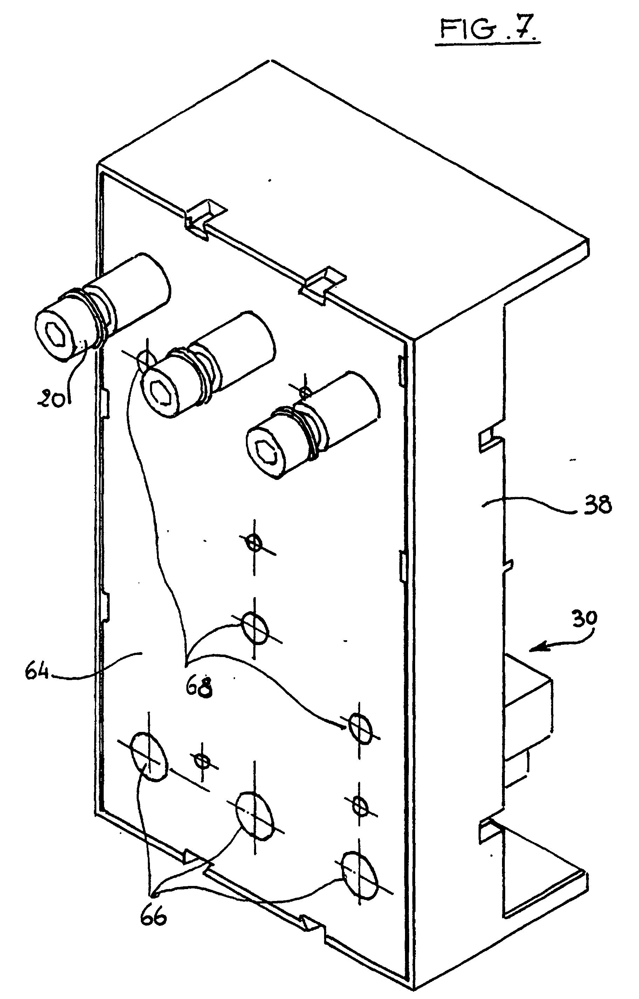

Un plastron 64 isolant recouvre toute la surface supérieure de la platine 30 en cachant les conducteurs de dérivation D1, D2, D3. Des opercules 66 (figure 7) détachables sont prévus dans le plastron 64 en regard des orifices 58,60 des conducteurs de dérivation D1, D2, D3. Le plastron 64 comporte de plus des trous 68 borgnes agencés dans la zone médiane pour la mise en réserve des vis de serrage 20 avant l'installation.

Les conducteurs de dérivation D1 et D3 présentent des structures identiques, mais sont inversés d'un demi-tour l'un par rapport à l'autre lors de leur mise en place dans les compartiments externes du boîtier 38.

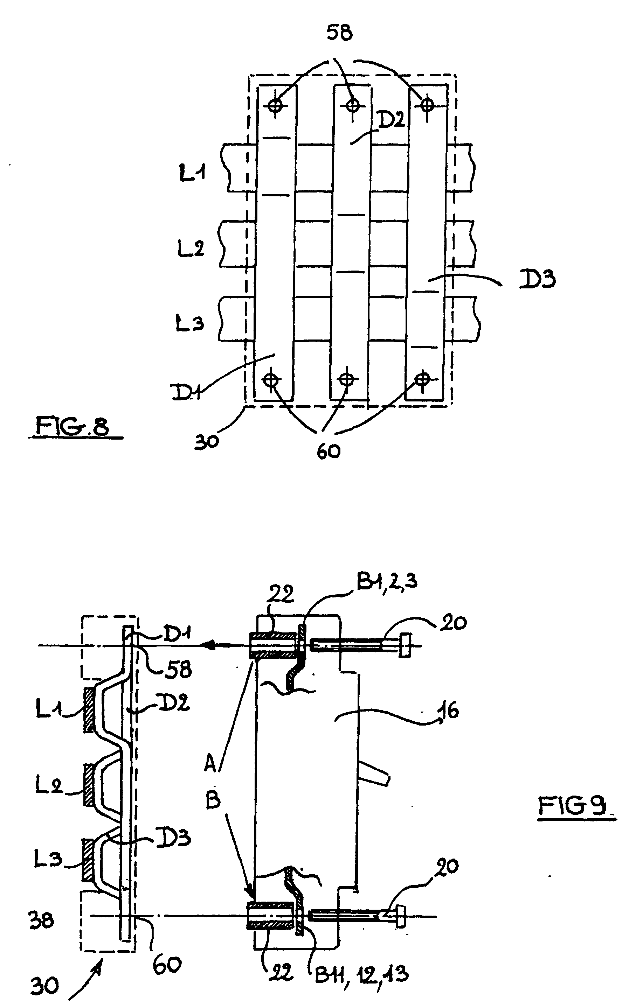

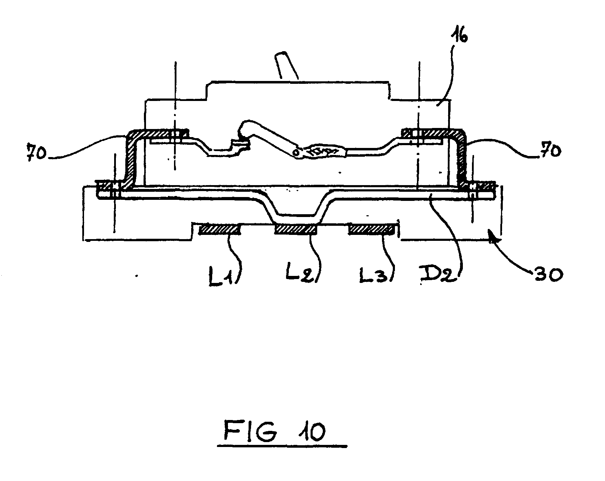

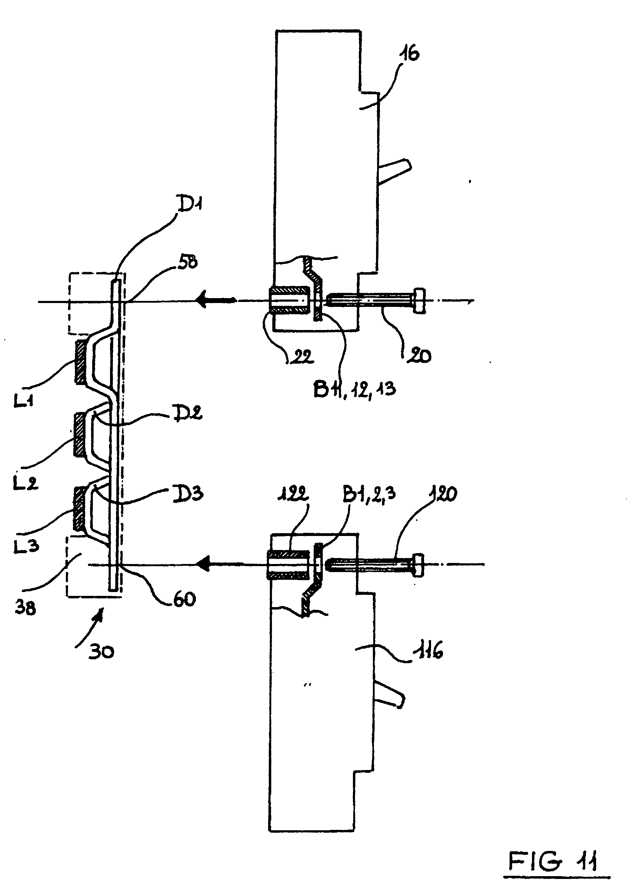

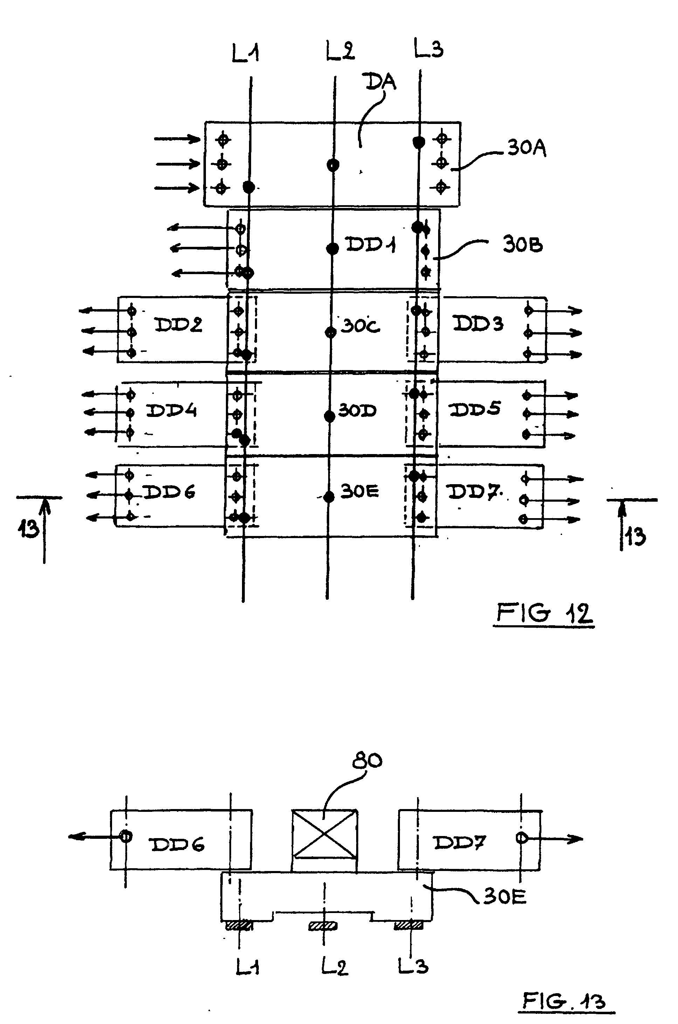

L'agencement symétrique des orifices 58, 60 de la platine 30 permet lors de la phase d'installation après le montage sur le jeu de barres L1, L2, L3, de choisir entre une liaison avec les bornes B1, B2, B3 amont ou bien les bornes B11, B12, B13 aval de l'appareil 16 (figures 8 et 9). Il suffit de choisir l'emplacement A ou B des organes de connexion entre les plages de liaison des bornes amont et aval, et les orifices 58 ou 60 de la platine 30. Les organes de connexion en matériau conducteur peuvent être des entretoises 22 tubulaires (figure 9) ou des équerres 70 (figure 10).

Les bornes B1, B2, B3; B11, B12, B13 de l'appareil 16 peuvent être avantageusement du type décrit dans le document EP-A- 0 555 157.

L'emplacement A des entretoises 22 de connexion correspond à une alimentation de l'appareil 16 par l'amont, et à des départs par l'aval grâce aux bornes B11, B12, B13. Les opercules 66 du bord supérieur du plastron 64 sont cassés pour autoriser le passage des vis de raccordement 20. Les opercules 66 du bord inférieur du plastron 64 sont laissés en place, les départs s'effectuant directement par des câbles (non représentés) introduits dans les bornes B11, B12, B13. Les entretoises de l'emplacement B ne sont pas utilisées dans ce type d'installation.

Dans le cas inverse d'une alimentation de l'appareil 16 par l'aval, les entretoises 22 sont prévues uniquement à l'emplacement B, et pas en A. Les départs s'effectuent par l'amont grâce aux bornes B1, B2, B3, et seules les opercules 66 du haut sont laissés en place sur le plastron 64.

Le choix de l'alimentation de l'appareil 16 par l'amont ou l'aval (figure 9) intervient lorsque la platine 30 est montée sur le jeu de barres L1, L2, L3, et ne nécessite aucun démontage du plastron 64, ou retournement du boîtier 38.

En référence à la figure 11, la platine 30 selon les figures 1 à 7 peut être utilisée pour l'alimentation électrique de deux appareils 16, 116 montés en tête-bêche. L'appareil 16 possède une alimentation par l'aval en utilisant l'emplacement B des entretoises 22, et l'introduction des vis 20 dans les orifices 58 supérieurs des conducteurs de dérivation D1, D2, D3. L'autre appareil 116 est doté d'une alimentation par l'amont en utilisant l'emplacement A des entretoises 122, et le passage des vis 120 dans les orifices 60 inférieurs de la platine 30. Dans ce cas d'application, l'usage des deux séries d'entretoises 22 et 122 permet d'obtenir avec une seule platine 30 un système de répartition à double départs sur un même niveau.

Les figures 12 et 13 montrent une installation électrique triphasée agencée selon un répartiteur vertical avec un empilement d'une pluralité de platines 30A, 30B, 30C, 30D, 30E sur le jeu de barres L1, L2, L3. La platine de tête 30A est plus grande que les autres platines, et porte le disjoncteur d'arrivée DA, lequel alimente et protège le jeu de barres L1, L2, L3. La deuxième platine 30B placée sous la platine de tête 30A, est équipée d'un disjoncteur DD1 avec un départ du type représenté à la figure 9. Chacune des platines suivantes 30C, 30D, 30E alimente deux disjoncteurs DD2, DD3; DD4, DD5; DD6, DD7 en tête-bêche du type illustré à la figure 11.

Le volume central libre délimité entre les disjoncteurs DD2, DD3; DD4, DD5; DD6, DD7 est avantageusement utilisé pou la mise en place d'une goulotte 80 de passage de filerie, notamment les conducteurs des auxiliaires électriques de signalisation et de déclenchement logés dans les disjoncteurs. La goulotte 80 s'étend verticalement le long de la direction d'empilement des platines 30C, 30D, 30E.

La platine 30 selon les figures 3 à 7 est du type tripolaire à boîtier 38 monobloc. Il est bien entendu possible de lui adjoindre un module de neutre équipé d'un conducteur de dérivation pour constituer une platine tétrapolaire, adaptée pour un réseau triphasé et neutre distribué. Le module de neutre peut être placé à droite ou à gauche du boîtier 38.

Selon une autre variante (non représentée), la platine d'adaptation peut être formée par l'assemblage côte à côte de plusieurs modules unipolaires de structures identiques. Il est aussi possible de constituer des platines bipolaires, tripolaires ou tétrapolaires avec des mêmes éléments modulaires.

## Revendications

1. Dispositif de support et d'alimentation électrique pour un appareil électrique multipolaire, comprenant une platine (30) parallèlélipipédique à boîtier (38) en matériau isolant moulé, susceptible d'être montée sur les barres collectrices parallèles d'un jeu de barres (L1, L2, L3), et renfermant:
- des conducteurs de dérivation (D1, D2, D3) présentant des longueurs identiques et s'étendant perpendiculairement au jeu de barres (L1, L2, L3), dans des compartiments (32, 34, 36) adjacents du boîtier (38), chaque conducteur comportant au moins une plage de raccordement électrique avec une borne correspondante de l'appareil (16, 116), et une plage de contact (52A, 52B, 52C) destinée à venir en engagement avec la barre collective de la phase correspondante, les plages de raccordement étant agencées au voisinage des parties terminales opposées (46A, 46B; 48A, 48B; 50A, 50B) des conducteurs de dérivation (D1, D2, D3),
- des organes de connexion entre les bornes de l'appareil (16, 116) et les plages de raccordement des conducteurs de dérivation (D1, D2, D3),
- et des moyens de retenue pour assurer le serrage des plages de contact (52A, 52B, 52C) contre les barres collectrices du jeu de barres (L1, L2, L3),
**caractérisé en ce que**:
- les conducteurs de dérivation (D1, D2, D3) sont coudés,
- les plages de contact (52A, 52B, 52C) sont situées dans un même plan s'étendant parallèlement à celui des plages de raccordement avec un décalage prédéterminé,
- les plages de raccordement comportent des orifices (58, 60) disposés symétriquement par rapport au plan moyen horizontal de la platine (30) pour autoriser la mise en place des organes de connexion avec les bornes amont (B1, B2, B3) ou les bornes aval (B11, B12, B13) de l'appareil (16, 116),
- les organes de connexion électrique comprennent des entretoises (22) conductrices de formes tubulaires agencées entre lesdites bornes amont ou aval, et les plages de raccordement correspondantes des conducteurs de dérivation (D1, D2, D3), la fixation étant obtenue au moyen de vis de serrage (20) traversant respectivement lesdites bornes, les entretoises (22) et les orifices (58, 60) associés.

2. Dispositif de support et d'alimentation électrique selon la revendication 1, **caractérisé en ce que** les conducteurs de dérivation (D1, D2, D3) sont protégés par un plastron (64) isolant recouvrant toute la surface supérieure de la platine (30), et ayant des opercules (66) détachables en regard des orifices (58,60) pour le passage des organes de connexion.

3. Dispositif de support et d'alimentation électrique selon la revendication 2, **caractérisé en ce que** le plastron (64) isolant est pourvu de trous (68) borgnes agencés dans la zone médiane entre les deux séries d'opercules (66) pour la mise en réserve des vis de serrage (20).

4. Dispositif de support et d'alimentation électrique selon la revendication 1, **caractérisé en ce que** les moyens de retenue comporte des étriers (54) enfourchant chaque conducteur de dérivation (D1, D2, D3) au niveau de la plage de contact (52A, 52B, 52C), chaque étrier (54) étant doté d'une encoche semi-ouverte destinée à s'accrocher à l'amère de la barre collectrice correspondante suite à l'action de serrage d'une vis de fixation (56) et que la longueur des conducteurs de dérivation (D1, D2, D3) est supérieure à l'écartement entre les deux barres collectives (L1, L3) extrèmes du jeu de barres.

5. Dispositif de support et d'alimentation électrique selon l'une des revendications 1 à 4, **caractérisé en ce que** le boîtier (38) monobloc d'une platine (30) tripolaire peut être accolé latéralement à un module de neutre à conducteur de dérivation unique pour constituer une platine tétrapolaire.

6. Dispositif de support et d'alimentation électrique selon l'une des revendications 1 à 4, **caractérisé en ce que** la platine d'adaptation est formée par l'assemblage côte à côte de plusieurs modules unipolaires, bipolaires ou tripolaires.

7. Installation de distribution et de répartition électrique comportant au moins un dispositif de support et d'alimentation électrique pour un appareil électrique multipolaire, comprenant une platine (30) parallèlélipipédique à boîtier (38) en matériau isolant moulé, susceptible d'être montée sur les barres collectrices parallèles d'un jeu de barres (L1, L2, L3), et renfermant :
- des conducteurs de dérivation (D1, D2, D3) présentant les mêmes longueurs, et s'étendant perpendiculairement au jeu de barres (L1, L2, L3), dans des compartiments (32, 34, 36) adjacents du boîtier (38), chaque conducteur comportant au moins une plage de raccordement électrique avec une borne correspondante de l'appareil (16, 116), et une plage de contact (52A, 52B, 52C) destinée à venir en engagement avec la barre collective de la phase correspondante, les plages de raccordement étant agencées au voisinage des parties terminales opposées (46A, 46B; 48A, 48B; 50A, 50B) des conducteurs de dérivation (D1, D2, D3),
- des organes de connexion entre les bornes de l'appareil (16, 116) et les plages de raccordement des conducteurs de dérivation (D1, D2, D3),
- et des moyens de retenue pour assurer le serrage des plages de contact (52A, 52B, 52C) contre les barres collectrices du jeu de barres (L1, L2, L3),
**caractérisée en ce que** les conducteurs de dérivation (D1, D2, D3) sont coudés, que les plages de raccordement comportent des orifices (58, 60) disposés symétriquement par rapport au plan moyen horizontal de la platine (30) pour autoriser la mise en place des organes de connexion avec les bornes amont (B1, B2, B3) ou les bornes aval (B11, B12, B13) de l'appareil (16, 116), que lesdites plages de contact sont situées dans un même plan s'étendant parallèlement à celui des plages de raccordement avec un décalage prédéterminé, que les organes de connexion électrique comprennent des entretoises (22) conductrices de formes tubulaires agencées entre lesdites bornes amont ou aval, et les plages de raccordement correspondantes des conducteurs de dérivation (D1, D2, D3), la fixation étant obtenue au moyen de vis de serrage (20) traversant respectivement lesdites bornes, les entrètoises (22) et les orifices (58, 60) associés, et que la même platine (30) peut recevoir au choix un seul appareil, ou deux appareils à départs opposés.

8. Installation de distribution et de répartition électrique selon la revendication 7, agencée selon un répartiteur vertical, **caractérisée en ce que** le répartiteur comporte une pluralité de platines (30C, 30D, 30E) empilées les unes sur les autres le long du jeu de barres (L1, L2, L3), et destinées à alimenter deux rangées de disjoncteurs (DD2, DD4, DD6; DD3, DD5, DD7) séparées l'une de l'autre par un espace central dans lequel s'étend une goulotte (80) pour le passage de filerie.

## Patentansprüche

1. Trag- und Stromversorgungsanordnung für ein mehrpoliges elektrisches Schaltgerät, welche Anordnung einen kastenförmigen Sockel (30) mit Isolierstoffgehäuse (38) umfaßt, der dazu dient, auf den parallel zueinander angeordneten Sammelschienen einer Sammelschienenanordnung (L1, L2, L3) montiert zu werden, und folgende Teile enthält
- in aneinandergrenzenden Abteilen (32, 34, 36) des Gehäuses (38) senkrecht zur Sammelschienenanordnung (L1, L2, L3) verlaufende Abzweigleiter (D1, D2, D3) gleicher Länge, die jeweils mindestens ein Anschlußstück zur Verbindung mit einer zugeordneten Klemme des Schaltgeräts sowie eine Kontaktfahne (52A, 52B, 52C) umfassen, welche dazu dient, gegen die Sammelschiene der zugeordneten Phase geführt zu werden, wobei die Anschlußstücke in der Nähe der einander gegenüberliegenden Endabschnitte (46A, 46B; 48A, 48B; 50A, 50B) der Abzweigleiter (D1, D2, D3) ausgebildet sind,
- zwischen den Klemmen des Schaltgeräts (16, 116) und den Anschlußstücken der Abzweigleiter (D1, D2, D3) angeordnete Verbindungselemente,
- sowie Haltemittel zum Festklemmen der Kontaktfahnen (52A, 52B, 52C) auf den Sammelschienen der Sammelschienenanordnung (L1, L2, L3),
**dadurch gekennzeichnet, daß**
- die Abzweigleiter (D1, D2, D3) eine abgewinkelte Form aufweisen,
- die genannten Kontaktfahnen (52A, 52B, 52C) in einer Ebene angeordnet sind, die in einem bestimmten Abstand parallel zur Ebene der Anschlußstücke liegt,
- die Anschlußstücke in bezug zur horizontalen Mittelebene des Sockels (30) symmetrisch angeordnete Öffnungen (58, 60) aufweisen, um das Einsetzen von Verbindungselementen zum Anschluß an die oberen (B1, B2, B3) oder die unteren Klemmen (B11, B12, B13) des Schaltgeräts (16, 116) zu ermöglichen,
- die elektrischen Verbindungselemente zwischen den genannten oberen bzw. unteren Klemmen und den zugehörigen Anschlußstücken der Abzweigleiter (D1, D2, D3) angeordnete rohrförmige, leitende Zwischenstücke (22) umfassen, wobei die Befestigung mit Hilfe von durch die genannten Klemmen, die Zwischenstücke (22) und die zugeordneten Öffnungen (58, 60) geführten Klemmschrauben (20) erfolgt.

2. Trag- und Stromversorgungsanordnung nach Anspruch 1, **dadurch gekennzeichnet, daß** die Abzweigleiter (D1, D2, D3) durch eine Isolierstoffabdeckung (64) geschützt sind, welche die gesamte Vorderseite des Sockels abdeckt und den Öffnungen (58, 60) gegenüberliegende, ausbrechbare Plättchen (66) zur Durchführung der Verbindungselemente aufweist.

3. Trag- und Stromversorgungsanordnung nach Anspruch 2, **dadurch gekennzeichnet, daß** die Isolierstoffabdeckung (64) in ihrem Mittelbereich zwischen den beiden Reihen der Plättchen (66) ausgebildete Blindbohrungen (68) zur Aufbewahrung der Klemmschrauben (20) aufweist.

4. Trag- und Stromversorgungsanordnung nach Anspruch 1, **dadurch gekennzeichnet, daß** die Haltemittel in Höhe der Kontaktfahne (52A, 52B, 52C) um jeden Abzweigleiter (D1, D2, D3) geführte Bügel (54) umfassen, wobei jeder Bügel (54) einen halbseitig offenen Schlitz aufweist, der dazu dient, sich nach dem Anziehen einer Befestigungsschraube (56) an der Rückseite der zugeordneten Sammelschiene abzustützen, und daß die Länge der Abzweigleiter (D1, D2, D3) größer ist als der Abstand zwischen den äußeren Sammelschienen (L1, L3) der Sammelschienenanordnung.

5. Trag- und Stromversorgungsanordnung nach einem der Ansprüche 1 bis 4, **dadurch gekennzeichnet, daß** das Einblockgehäuse (38) eines dreipoligen Sockels (30) seitlich an ein Neutralleitermodul mit einem einzelnen Abzweigleiter angereiht werden kann, um so einen vierpoligen Sockel zu bilden.

6. Trag- und Stromversorgungsanordnung nach einem der Ansprüche 1 bis 4, **dadurch gekennzeichnet, daß** der Adaptersockel durch seitliche Aneinanderreihung mehrerer einpoliger, zweipoliger oder dreipoliger Module gebildet wird.

7. Elektrische Einspeise- und Verteileranlage mit mindestens einer Trag- und Stromversorgungsanordnung für ein mehrpoliges elektrisches Schaltgerät, welche Anordnung einen kastenförmigen Sockel (30) mit Isolierstoffgehäuse (38) umfaßt, der dazu dient, auf den parallel zueinander angeordneten Sammelschienen einer Sammelschienenanordnung (L1, L2, L3) montiert zu werden, und folgende Teile enthält
- in aneinandergrenzenden Abteilen (32, 34, 36) des Gehäuses (38) senkrecht zur Sammelschienenanordnung (L1, L2, L3) verlaufende Abzweigleiter (D1, D2, D3) gleicher Länge, die jeweils mindestens ein Anschlußstück zur Verbindung mit einer zugeordneten Klemme des Schaltgeräts sowie eine Kontaktfahne (52A, 52B, 52C) umfassen, welche dazu dient, gegen die Sammelschiene der zugeordneten Phase geführt zu werden, wobei die Anschlußstücke in der Nähe der einander gegenüberliegenden Endabschnitte (46A, 46B; 48A, 48B; 50A, 50B) der Abzweigleiter (D1, D2, D3) ausgebildet sind,
- zwischen den Klemmen des Schaltgeräts (16, 116) und den Anschlußstücken der Abzweigleiter (D1, D2, D3) angeordnete Verbindungselemente,
- sowie Haltemittel zum Festklemmen der Kontaktfahnen (52A, 52B, 52C) auf den Sammelschienen der Sammelschienenanordnung (L1, L2, L3),
**dadurch gekennzeichnet, daß** die Abzweigleiter (D1, D2, D3) eine abgewinkelte Form aufweisen, daß die Anschlußstücke in bezug zur horizontalen Mittelebene des Sockels (30) symmetrisch angeordnete Öffnungen (58, 60) aufweisen, um das Einsetzen von Verbindungselementen zum Anschluß an die oberen (B1, B2, B3) oder die unteren Klemmen (B11, B12, B13) des Schaltgeräts (16, 116) zu ermöglichen, daß die genannten Kontaktfahnen (52A, 52B, 52C) in einer Ebene angeordnet sind, die in einem bestimmten Abstand parallel zur Ebene der Anschlußstücke liegt, daß die elektrischen Verbindungselemente zwischen den genannten oberen bzw. unteren Klemmen und den zugehörigen Anschlußstücken der Abzweigleiter (D1, D2, D3) angeordnete rohrförmige, leitende Zwischenstücke (22) umfassen, wobei die Befestigung mit Hilfe von durch die genannten Klemmen, die Zwischenstücke (22) und die zugeordneten Öffnungen (58, 60) geführten Klemmschrauben (20) erfolgt, und daß ein Sockel (30) wahlweise ein einzelnes Schaltgerät oder zwei Schaltgeräte mit entgegengesetzt angeordneten Abgängen aufnehmen kann.

8. Elektrische Einspeise- und Verteileranlage nach Anspruch 7, die als vertikaler Verteiler ausgebildet ist, **dadurch gekennzeichnet, daß** der Verteiler mehrere längs der Sammelschienenanordnung (L1, L2, L3) übereinander angeordnete Sockel (30C, 30D, 30E) umfaßt, die zur Einspeisung von zwei Reihen von Leistungsschaltern (DD2, DD4, DD6; DD3, DD5, DD7) dienen, welche durch einen Mittelabstand voneinander getrennt sind, in dem ein Kabelkanal (80) zur Durchführung einer Verdrahtung angeordnet ist.

## Claims

1. A support and electrical power supply device for a multipole electrical switchgear apparatus comprising a parallelipipedic mounting plate (30) with a case (38) made of moulded insulating material designed to be fitted on the parallel collecting bars of a busbar (L1, L2, L3) and housing:
- branch conductors (D1, D2, D3) presenting identical lengths and extending perpendicularly to the busbar (L1, L2, L3) in adjacent compartments (32, 34, 36) of the case (38), each conductor comprising at least one electrical connection strip for connection with a corresponding terminal of the apparatus (16, 116) and a contact strip (52A, 52B, 52C) designed to come into engagement with the collecting bar of the corresponding phase, the connection strips being arranged close to the opposite terminal parts (46A, 46B; 48A, 48B; 50A, 50B) of the branch conductors (D1, D2, D3),
- connection means between the terminals of the apparatus (16, 116) and the connection strips of the branch conductors (D1, D2, D3),
- and securing means to secure the contact strips (52A, 52B, 52C) against the collecting bars of the busbar (L1, L2, L3),
**characterized in that**:
- the branch conductors (D1, D2, D3) are bent,
- the contact strips (52A, 52B, 52C) are situated in the same plane as one another extending parallel to that of the connection strips with a predetermined offset,
- the connection strips comprise orifices (58, 60) arranged symmetrically with respect to the horizontal mid-plane of the mounting plate (30) to enable fitting of the connection means with the upstream terminals (B1, B2, B3) or the downstream terminals (B11, B12, B13) of the apparatus (16, 116),
- the electrical connection means comprise conducting spacers (22) of tubular shape arranged between said upstream or downstream terminals and the corresponding connection strips of the branch conductors D1, D2, D3), fixing being achieved by means of clamping screws (20) passing respectively through said terminals, the spacers (22) and the associated orifices (58, 60).

2. The support and electrical power supply device according to claim 1, **characterized in that** the branch conductors (D1, D2, D3) are protected by an insulating cover plate (64) covering the whole upper surface of the mounting plate (30) and having detachable covers (66) facing the orifices (58, 60) for passage of the connection means.

3. The support and electrical power supply device according to claim 2, **characterized in that** the insulating cover plate (64) is provided with blind holes (68) arranged in the middle zone between the two series of covers (66) for storing the securing screws (20).

4. The support and electrical power supply device according to claim 1, **characterized in that** the securing means comprise brackets (54) straddling each branch conductor (D1, D2, D3) at the level of the contact strip (52A, 52B, 52C), each bracket (54) being provided with a half-open notch designed to latch onto the rear of the corresponding collecting bar following the clamping action of a fixing screw (56) and that the length of the branch conductors (D1, D2, D3) is greater than the distance separating the two end collecting bars (L1, L3) of the busbar.

5. The support and electrical power supply device according to one of the claims 1 to 4, **characterized in that** the monoblock case (38) of a three-pole mounting plate (30) can be adjoined laterally to a neutral module with a single branch conductor to form a four-pole mounting plate.

6. The support and electrical power supply device according to one of the claims 1 to 4, **characterized in that** the mounting plate is formed by side-by-side assembly of several single-pole, two-pole or three-pole modules.

7. An electrical distribution and dispatching installation comprising at least one support and electrical power supply device for a multipole electrical switchgear apparatus comprising a parallelipipedic mounting plate (30) with a case (38) made of moulded insulating material designed to be fitted on the parallel collecting bars of a busbar (L1, L2, L3) and housing:
- branch conductors (D1, D2, D3) presenting the same lengths and extending perpendicularly to the busbar (L1, L2, L3) in adjacent compartments (32, 34, 36) of the case (38), each conductor comprising at least one electrical connection strip for connection with a corresponding terminal of the apparatus (16, 116), and a contact strip (52A, 52B, 52C) designed to come into engagement with the collecting bar of the corresponding phase, the connection strips being arranged close to the opposite terminal parts (46A, 46B; 48A, 48B, 50A, 50B) of the branch conductors (D1, D2, D3),
- connecting parts for connection between the terminals of the apparatus (16, 116) and the connection strips of the branch conductors (D1, D2, D3),
- and securing means to secure the contact strips (52A, 52B, 52C) against the collecting bars of the busbar (L1, L2, L3),
**characterized in that** the branch conductors (D1, D2, D3) are bent, that the connection strips comprise orifices (58, 60) arranged symmetrically with respect to the horizontal mid-plane of the mounting plate (30) to enable the connection means with the upstream terminals (B1, B2, B3) or the downstream terminals (B11, B12, B13) of the apparatus (16, 116) to be fitted, that said contact strips are situated in one and the same plane extending parallel to that of the connection strips with a preset offset, that the electrical connection means comprise conducting spacers (22) of tubular shape arranged between said upstream or downstream terminals and the corresponding connection strips of the branch conductors (D1, D2, D3), fixing being achieved by means of clamping screws (20) passing respectively through said terminals, the spacers (22) and the associated orifices (58, 60), and that the same mounting plate (30) can receive as required a single apparatus or two apparatuses with opposite feeders.

8. The electrical distribution and dispatching installation according to claim 7, arranged as a vertical distributor, **characterized in that** the distributor comprises a plurality of mounting plates (30C, 30D, 30E) stacked on one another along the busbar (L1, L2, L3) and designed to supply two rows of circuit breakers (DD2, DD4, DD6; DD3, DD5, DD7) separated from one another by a central space in which a trunking (80) runs to accommodate the wiring.
